(19) 
**Europäisches Patentamt**
**European Patent Office**
**Office européen des brevets**

(11) **EP 4 756 916 A1**

(12) **EUROPEAN PATENT APPLICATION**
published in accordance with Art. 153(4) EPC

(43) Date of publication:
**10.06.2026 Bulletin 2026/24**

(21) Application number: **24851739.3**

(22) Date of filing: **01.08.2024**

(51) International Patent Classification (IPC):
**H01M 4/38** (2006.01)     **C01B 25/00** (2006.01)
**H01M 4/36** (2006.01)

(52) Cooperative Patent Classification (CPC):
**C01B 25/00; H01M 4/36; H01M 4/38;** Y02E 60/10

(86) International application number:
**PCT/JP2024/027516**

(87) International publication number:
**WO 2025/033314 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 JP 2023127803**

(71) Applicants:
• **Sumitomo Chemical Company, Limited**
  **Tokyo 103-6020 (JP)**

• **Kyoto University**
  **Kyoto-shi, Kyoto 606-8501 (JP)**

(72) Inventors:
• **HASHIWAKI Hiroki**
  **Niihama-shi, Ehime 792-8521 (JP)**
• **NAKAJIMA Hideto**
  **Niihama-shi, Ehime 792-8521 (JP)**
• **NASARA Ralph Nicolai Vivares**
  **Kyoto-shi, Kyoto 606-8501 (JP)**

(74) Representative: **Vossius & Partner**
  **Patentanwälte Rechtsanwälte mbB**
  **Siebertstraße 3**
  **81675 München (DE)**

(54) **PHOSPHORUS-CARBON COMPOSITE NEGATIVE ELECTRODE MATERIAL, NEGATIVE ELECTRODE ACTIVE MATERIAL, NEGATIVE ELECTRODE FOR LITHIUM SECONDARY BATTERY, AND LITHIUM SECONDARY BATTERY**

(57) A phosphorus-carbon composite negative electrode material containing a phosphorus atom and a carbon atom, in which, in a volume-based cumulative particle size distribution curve obtained by a laser diffraction scattering type particle size distribution measurement method, $D_{10}$ is 1 μm or more, the $D_{10}$ being a value of a particle diameter at a 10% cumulative point from a fine particle side. In the phosphorus-carbon composite negative electrode material, a ratio $WL_{620}/WL_{780}$ of a weight reduction ratio $WL_{620}$ at a measurement temperature of 620°C and a weight reduction ratio $WL_{780}$ at a measurement temperature of 780°C, which are determined by a predetermined thermo gravimetric analysis, is preferably 0.1 or more and 0.9 or less.

**EP 4 756 916 A1**

**Description**

TECHNICAL FIELD

The present invention relates to a phosphorus-carbon composite negative electrode material, a negative electrode active material, a negative electrode for a lithium secondary battery, and a lithium secondary battery.
The present application claims priority based on Japanese Patent Application No. 2023-127803 filed in Japan on August 4, 2023, the contents of which are incorporated herein by reference.

BACKGROUND ART

A lithium secondary battery is used as a power supply for small electronic apparatuses such as a mobile phone and a notebook computer. In recent years, the lithium secondary battery has been advanced in medium or large power supplies such as automotive applications and power storage applications.
As a negative electrode active material of the lithium secondary battery, a carbon material is known. In the related art, for the purpose of improving battery performance, a negative electrode active material in which a carbon material further contains phosphorus is known (for example, see Patent Document 1). In the negative electrode active material described in Patent Document 1, by using a negative electrode active material in which a carbon material and phosphorus are composited, it is possible to provide a negative electrode having excellent charge and discharge capacity.

Citation List

Patent Document

Patent Document 1: Japanese Unexamined Patent Application, First Publication No. 2009-184861

SUMMARY OF THE INVENTION

Technical Problem

Further safety measures are required for the lithium secondary battery, and the negative electrode active material described in Patent Document 1 has room for improvement from the viewpoint of safety measures.
Specifically, the black phosphorus used in Patent Document 1 has high chemical stability and has excellent safety among phosphorus allotropes, but the present inventors have found that the chemical stability and safety tend to decrease in a case where the black phosphorus is processed into a fine powder.
The present invention has been made in view of the above circumstances, and an object thereof is to provide a phosphorus-carbon composite negative electrode material, a negative electrode active material, a negative electrode for a lithium secondary battery, and a lithium secondary battery, which have high safety.

Solution to Problem

To achieve the above object, one aspect of the present invention includes the following aspects.

[1] A phosphorus-carbon composite negative electrode material containing a phosphorus atom and a carbon atom, in which, in a volume-based cumulative particle size distribution curve obtained by a laser diffraction scattering type particle size distribution measurement method, $D_{10}$ is 1 $\mu$m or more, the $D_{10}$ being a value of a particle diameter at a 10% cumulative point from a fine particle side.
[2] The phosphorus-carbon composite negative electrode material according to [1], in which a ratio $WL_{620}/WL_{780}$ of a weight reduction ratio $WL_{620}$ at a measurement temperature of 620°C to a weight reduction ratio $WL_{780}$ at a measurement temperature of 780°C, which are determined by thermogravimetric analysis under the following conditions, is 0.1 or more and 0.9 or less,

(thermogravimetric analysis)
10 mg of the phosphorus-carbon composite negative electrode material is accurately weighed to obtain a sample, and a weight change in a case where the sample is heated from 50°C to 780°C at a temperature rising rate of 10 °C/minute under a nitrogen flow is measured using a thermogravimetric analyzer,
(weight reduction ratio)
a proportion of a weight of the sample at the measurement temperature to a weight of the accurately weighed sample is defined as a weight reduction ratio (%) at the measurement temperature.

[3] The phosphorus-carbon composite negative electrode material according to [1] or [2], in which an XPS spectrum has a peak indicating a bond between a phosphorus atom and a carbon atom.

[4] The phosphorus-carbon composite negative electrode material according to any one of [1] to [3], in which, in an XRD profile measured using a Cu K$\alpha$ ray, an intensity $I_{20}$ at $2\theta = 20°$, an intensity $I_{26.3}$ at $2\theta = 26.3°$, and an intensity $I_{40}$ at $2\theta = 40°$ satisfy the following expressions (1) to (3),

$$|P|/|B| < 2 \ ... \ (1)$$

$$P = I_{26.3} - I_{40} \ ... \ (2)$$

$$B = (I_{20} - I_{40}) \times (26.3 - 40)/(20 - 40) \ ... \ (3).$$

[5] The phosphorus-carbon composite negative electrode material according to any one of [1] to [4], including a core particle containing a phosphorus atom, and a carbon film covering a surface of the core particle.

[6] A negative electrode active material including the phosphorus-carbon composite negative electrode material according to any one of [1] to [5].

[7] A negative electrode for a lithium secondary battery, including the negative electrode active material according to [6].

[8] A lithium secondary battery including the negative electrode for a lithium secondary battery according to [7].

Advantageous Effects of Invention

According to the present invention, it is possible to provide a phosphorus-carbon composite negative electrode material, a negative electrode active material, a negative electrode for a lithium secondary battery, and a lithium secondary battery, which have high safety.

BRIEF DESCRIPTION OF DRAWINGS

[FIG. 1] A graph showing a result of performing thermogravimetric analysis for a P-C negative electrode material and a P-C mixture.

[FIG. 2] An XPS spectrum of the P-C negative electrode material and the P-C mixture.

[FIG. 3] A transmission electron microscope (TEM) photograph of the P-C material.

[FIG. 4] An XRD profile of the P-C negative electrode material and the P-C mixture.

[FIG. 5] A schematic view showing an all-solid-state lithium secondary battery which is an example of a battery.

[FIG. 6] A schematic view showing an all-solid-state lithium secondary battery which is an example of a battery.

DESCRIPTION OF EMBODIMENTS

<Phosphorus-carbon composite negative electrode material>

The phosphorus-carbon composite negative electrode material according to the present embodiment contains a phosphorus atom and a carbon atom. In the following description, the "phosphorus-carbon composite negative electrode material" may be simply referred to as a "P-C negative electrode material".

In one aspect of the present invention, the P-C negative electrode material is a powder.

In the present embodiment, whether or not the P-C negative electrode material has high safety is evaluated by confirming whether or not ignition occurs by a cerium-iron spark test method described in Examples later. Specifically, the P-C negative electrode material that does not ignite even once in an ignition test by the cerium-iron spark test method is evaluated as having high safety.

One aspect of the P-C negative electrode material consists of a phosphorus-carbon material containing a phosphorus atom and a carbon element. Hereinafter, the "phosphorus-carbon material" may be referred to as a "P-C material".

One aspect of the P-C negative electrode material is a composite material containing a P-C material and a resin component.

In a volume-based cumulative particle size distribution curve of the P-C negative electrode material obtained by a laser diffraction scattering type particle size distribution measurement method, $D_{10}$ is 1 $\mu$m or more, the $D_{10}$ being a value of a particle diameter at a 10% cumulative point from a fine particle side. $D_{10}$ indicates a particle diameter at which a proportion of particles having a value equal to or less than the value is 10%.

The P-C negative electrode material in which $D_{10}$ is 1 $\mu$m or more means that a volume proportion of fine particles having a particle diameter of 1 $\mu$m or less is 10% and a proportion of fine particles is small. As a result of studies by the present inventors, it has been found that the P-C negative electrode material is difficult to ignite by reducing the fine particles until $D_{10}$ is 1 $\mu$m or more and a P-C negative electrode material having high safety can be provided. It has been confirmed that the P-C negative electrode material according to the present embodiment is a P-C negative electrode material that is difficult to ignite and has high safety because the fine particles are small and the surface area in contact with oxygen or an ignition source is small.

[Method for measuring $D_{10}$]

$D_{10}$ ($\mu$m) of the P-C negative electrode material can be measured by the following method.

Specifically, first, 2 mg of the P-C negative electrode material is dispersed in distilled water, and a particle size distribution is measured by a laser diffraction scattering type particle size distribution meter while mechanically stirring the dispersion to obtain a volume-based cumulative particle size distribution curve. In the obtained cumulative particle size distribution curve, a value of a particle diameter at a 10% cumulative point from a small particle side is defined as $D_{10}$.

As the laser diffraction scattering type particle size distribution meter, for example, SALD-2300 manufactured by Shimadzu Corporation can be used.

$D_{10}$ of the P-C negative electrode material is, for example, 1.2 $\mu$m or more, 1.5 $\mu$m or more, or 2.0 $\mu$m or more.

$D_{10}$ of the P-C negative electrode material is, for example, 5 $\mu$m or less, 4 $\mu$m or less, or 3.5 $\mu$m or less. The upper limit value and the lower limit value of $D_{10}$ of the P-C negative electrode material can be optionally combined. Examples of the combination are 1.2 $\mu$m or more and 5 $\mu$m or less, 1.5 $\mu$m or more and 4 $\mu$m or less, and 2.0 $\mu$m or more and 3.5 $\mu$m or less.

In a case where the P-C negative electrode material is a composite material, as the resin component, a material used as a binder resin in a secondary battery is preferable. Specific examples thereof include a thermoplastic binder and an aqueous binder.

Examples of the thermoplastic binder include fluororesins such as polyvinylidene fluoride, polytetrafluoroethylene, a tetrafluoroethylene/hexafluoropropylene/vinylidene fluoride copolymer, a hexafluoropropylene/vinylidene fluoride copolymer, and a tetrafluoroethylene/perfluorovinyl ether copolymer; polyolefin resins such as polyethylene and polypropylene; and amide-based resins such as polyimide and polyamide-imide.

The thermoplastic binder is preferably a fluororesin and more preferably polyvinylidene fluoride.

Examples of the aqueous binder include styrene butadiene rubber (SBR), carboxymethyl cellulose (CMC), an acrylic resin, and the like.

In a case where the P-C material contains other components other than the phosphorus atom and the carbon atom, the amount of the other components is preferably 1% by mass or more and 15% by mass or less, more preferably 2% by mass or more and 12% by mass or less, and still more preferably 2.5% by mass or more and 8% by mass or less with respect to the total amount of the other components other than the phosphorus atom and the carbon atom.

In a case where the amount of the other components is in the above range, in addition to the effect that the movement of lithium ions is not easily hindered and the safety is high, the discharge capacity or the cycle characteristics of the secondary battery are likely to be improved.

In the P-C negative electrode material, it is preferable that $D_{10}$ satisfies the above range and the amount of the phosphorus atom in the P-C material is 10% by mass or more and 95% by mass or less. In addition, it is preferable that the amount of the carbon atom in the P-C material is 5% by mass or more and 90% by mass or less. In a case where the P-C material consists of the phosphorus atom and the carbon atom, the total of the amount of the carbon atom and the amount of the phosphorus atom in the P-C material is 100% by mass. It is noted that even in a case where the P-C material consists of the carbon atom and the phosphorus atom, impurities unavoidably mixed in from a raw material or a manufacturing step of the P-C negative electrode material are allowed.

The P-C material is composed of the phosphorus atom and the carbon atom in an amount of 60% by mass or more based on a total amount thereof, and may further contain an element other than the phosphorus atom and the carbon atom.

Examples of the element other than the phosphorus atom and the carbon atom contained in the P-C material include lithium, silicon, germanium, tin, aluminum, zinc, magnesium, transition metals, nitrogen, oxygen, fluorine, silicon, titanium, niobium, sulfur, and chlorine. These can be used as raw materials in the form of a metal oxide, a composite metal oxide, a metal fluoride, a metal sulfide, a metal chloride, silicon oxide, a silicate, a titanate, or an aluminosilicate.

The amount of the phosphorus atom, the amount of the carbon atom, and the amount of the other atom that can be contained in the P-C material can be determined by known ICP analysis.

In the P-C material, the amount of the phosphorus atom is preferably 20% by mass or more, more preferably 30% by mass or more, and still more preferably 50% by mass or more. A higher amount of phosphorus increases the initial charge and discharge capacity of the P-C negative electrode material. In addition, in the P-C material, the amount of the phosphorus atom is preferably 90% by mass or less, more preferably 80% by mass or less, and still more preferably 75% by mass or less. This is because the cycle characteristics of the P-C negative electrode material decrease in a case where the amount of the phosphorus atom is too high. The upper limit value and the lower limit value of the amount of the phosphorus atom can be optionally combined.

In the P-C material, the amount of the carbon atom is preferably 10% by mass or more, more preferably 20% by mass or more, and still more preferably 25% by mass or more. A higher amount of the carbon atom increases the cycle characteristics of the P-C negative electrode material. In addition, in the P-C material, the amount of the carbon atom is preferably 80% by mass or less, more preferably 70% by mass or less, and still more preferably 50% by mass or less. This is because the initial charge and discharge capacity of the P-C negative electrode material decreases in a case where the amount of the carbon atom is too high. The upper limit value and the lower limit value of the amount of the carbon atom can be optionally combined.

Although the details will be described later, the P-C negative electrode material can be manufactured by ball-mill mixing a phosphorus material and a carbon material, or by ball-mill mixing a phosphorus material, a carbon raw material, and a binder resin. The present inventors have analyzed the obtained P-C material in detail and studied the P-C material, and as a result, it has been confirmed that the P-C negative electrode material is not a mixture obtained by simply mixing phosphorus and a carbon material as a raw material, but is a new material in which the phosphorus atom and the carbon atom are chemically bonded (covalent bond) in the P-C material and has physical properties different from those of the phosphorus and the carbon material as the raw materials. Even in a case of ball-mill mixing the phosphorus material, the carbon raw material, and the binder resin, a negative electrode active material in which the phosphorus atom and the carbon atom are chemically bonded (covalent bond) is generated.

Hereinafter, the physical properties of the P-C negative electrode material will be described in detail in comparison with the P-C negative electrode material and a mixture of phosphorus and a carbon material (hereinafter, may be referred to as a "P-C mixture").

In the following description, an example of the P-C negative electrode material and an example of a mixture obtained by mixing the same raw material as the P-C negative electrode material in a mortar are compared. In the examples shown below, both the raw material of the P-C negative electrode material and the raw material of the P-C mixture contain black phosphorus and a carbon material at a ratio of 6:4 (mass ratio). In both the P-C material and the P-C mixture, cup-stacked carbon nanotubes (CSCNTs) are used as the carbon material.

[Behavior with respect to heat]

In the P-C negative electrode material, a ratio $WL_{620}/WL_{780}$ of a weight reduction ratio $WL_{620}$ at a measurement temperature of 620°C to a weight reduction ratio $WL_{780}$ at a measurement temperature of 780°C, which are determined by thermogravimetric analysis under the following conditions, is 0.1 or more and 0.9 or less.

(Thermogravimetric analysis)

10 mg of the phosphorus-carbon composite negative electrode material is accurately weighed to obtain a sample, and a weight change in a case where the sample is heated from 50°C to 780°C at a temperature rising rate of 10 °C/minute under a nitrogen flow is measured using a thermogravimetric analyzer.

(Weight reduction ratio)

The proportion of the weight of the sample at the measurement temperature to the weight of the accurately weighed sample is defined as a weight reduction ratio (%) at the measurement temperature.

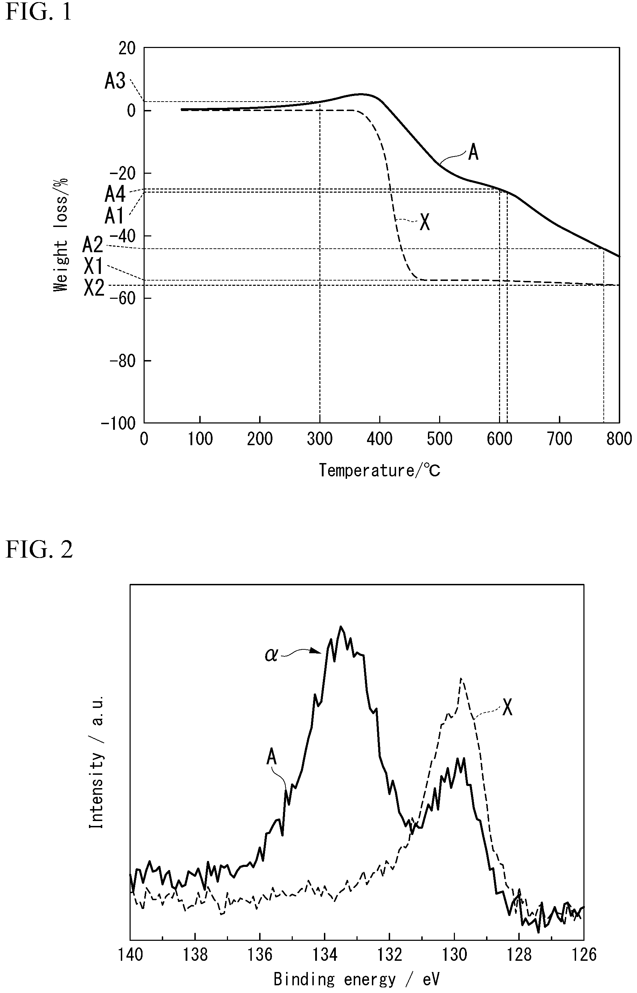

FIG. 1 is a graph showing a result of thermogravimetric analysis for a P-C negative electrode material and a P-C mixture. In FIG. 1, the horizontal axis is a heating temperature (°C), and the vertical axis is a weight reduction ratio (%) with respect to the weight of the sample. FIG. 1 is a graph in which a reference numeral A indicates the behavior of the P-C negative electrode material and a reference numeral X indicates the behavior of the P-C mixture.

As shown in FIG. 1, in the P-C mixture, a ratio $WL_{620}/WL_{780}$ of a weight reduction ratio $WL_{620}$ (indicated by a reference numeral X1 in FIG. 1) at a measurement temperature of 620°C and a weight reduction ratio $WL_{780}$ (indicated by a reference numeral X2 in FIG. 1) at a measurement temperature of 780°C is less than 0.58. The P-C mixture shows a steep weight reduction at around a measurement temperature of 350°C to 450°C, and at 620°C, the sample weight is reduced by about 60% from an initial weight of the sample.

It is considered that the reduced weight corresponds to the weight of black phosphorus as a raw material. In the P-C mixture, it is considered that the black phosphorus contained in the P-C mixture is lost by heating. It is known that black phosphorus is changed to red phosphorus, which is an allotrope, by heating at 125°C. In addition, it is known that the red phosphorus sublimes at 416°C under normal pressure.

On the other hand, in the P-C negative electrode material, a ratio $WL_{620}/WL_{780}$ of a weight reduction ratio $WL_{620}$ (indicated by a reference numeral A1 in FIG. 1) at a measurement temperature of 620°C and a weight reduction ratio $WL_{780}$ (indicated by a reference numeral A2 in FIG. 1) at a measurement temperature of 780°C is in a range of 0.1 or more and 0.9 or less.

In addition, in the P-C negative electrode material, a ratio $WL_{300}/WL_{600}$ of a weight reduction ratio $WL_{300}$ (indicated by a reference numeral A3 in FIG. 1) at a measurement temperature of 300°C and a weight reduction ratio $WL_{600}$ (indicated by a reference numeral A4 in FIG. 1) at a measurement temperature of 600°C, which were determined by thermogravimetric analysis, is preferably in a range of -0.1 or more and 0.15 or less.

That is, the P-C negative electrode material has almost no weight reduction up to a measurement temperature of 300°C unlike the P-C mixture, and is thermally stable at a measurement temperature of 300°C.

$WL_{620}/WL_{780}$ is preferably 0.1 or more, more preferably 0.3 or more, and still more preferably 0.5 or more. In addition, $WL_{620}/WL_{780}$ is preferably 0.9 or less and more preferably 0.8 or less. The upper limit value and the lower limit value of $WL_{620}/WL_{780}$ can be optionally combined.

$WL_{300}/WL_{600}$ is preferably -0.1 or more and more preferably -0.08 or more. In addition, $WL_{300}/WL_{600}$ is preferably 0.15 or less and more preferably 0.10 or less. The upper limit value and the lower limit value of $WL_{300}/WL_{600}$ can be optionally combined.

From the results shown in FIG. 1, it is considered that, in the P-C negative electrode material, the black phosphorus used as a raw material is changed to a substance that shows a behavior different from the black phosphorus with respect to heat.

[Presence or absence of P-C bond]

The P-C negative electrode material has, in an XPS spectrum, a peak indicating a bond between the phosphorus atom and the carbon atom. It is known that the "peak indicating a bond between a phosphorus atom and a carbon atom" appears in a range of 132 to 136 eV in the XPS spectrum. It is noted that in the following description, the bond between the phosphorus atom and the carbon atom may be simply referred to as a "P-C bond".

FIG. 2 has XPS spectra of the P-C negative electrode material and the P-C mixture. In FIG. 2, the horizontal axis indicates a binding energy (eV), and the vertical axis indicates the number of detected photoelectrons (count per second (cps)). In FIG. 2, a reference numeral A indicates a P-C material, and a reference numeral X indicates a P-C mixture.

(XPS spectrum measurement conditions)

The XPS spectrum is measured under the following measurement conditions.

· Measurement device: XPS device, ESCA-3400 (manufactured by Shimadzu Corporation)
· Source: Mg Kα ray (20 mA, 10 kV)

In a case where a peak is detected in a range of 132 to 136 eV, it is determined that the P-C bond is present.

As shown in FIG. 2, it can be seen that, in the P-C mixture, a peak indicating a P-C bond is not detected in a range of 132 to 136 eV, but in the P-C negative electrode material, a peak indicating a P-C bond (indicated by a reference numeral α) is detected.

From the results shown in FIG. 2, it is considered that, in the P-C negative electrode material, a substance having a chemical bond between the phosphorus atom and the carbon atom is formed.

[Appearance]

The P-C material preferably includes a core particle containing a phosphorus atom and a carbon film covering a surface of the core particle.

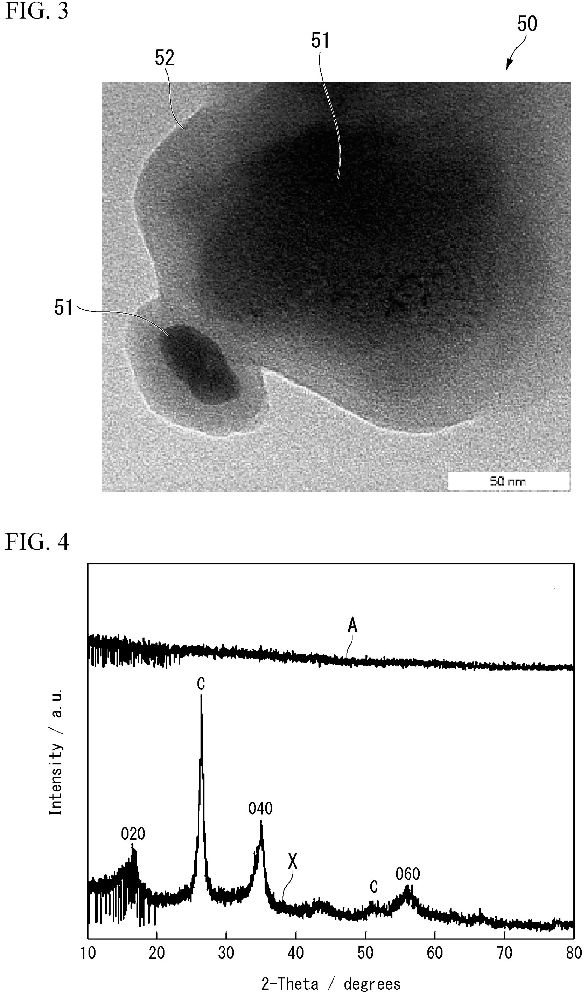

FIG. 3 is a transmission electron microscope (TEM) photograph of the P-C material. As shown in FIG. 3, the particle 50 which is the P-C material has a core-shell structure in which a surface of a core particle 51 containing a phosphorus atom is covered with a carbon film 52.

The presence of the phosphorus atom and the carbon atom in the P-C material can be confirmed by using energy dispersive X-ray spectroscopy (EDX).

In addition, in a case where the P-C material consists of only the phosphorus atom and the carbon atom, in the TEM photograph, the phosphorus atom, which is a heavier atom, appears with higher contrast. Therefore, based on the TEM photograph, it can be simply determined that the core particle 51 contains a phosphorus atom and has a core-shell structure covered with a carbon film 52 containing a carbon atom.

(Imaging conditions of TEM photograph)

The TEM photograph is captured under the following imaging conditions.

· TEM device: transmission electron microscope H-9000NAR (manufactured by Hitachi, Ltd.)
· Field of view range: maximum of 500 nm × 500 nm At least a part of the particles of the P-C negative electrode material is imaged in the field of view range.

According to the imaging conditions of the TEM photograph, the core-shell structure can be confirmed in the same manner even in an aspect in which the P-C negative electrode material consists of a phosphorus-carbon material containing a phosphorus atom and a carbon element and even in an aspect in which the P-C material is a composite material containing a resin component.

In addition to satisfying the requirements for the above-described [Behavior with respect to heat], it is preferable that the P-C negative electrode material is a P-C material having a core-shell structure.

[Crystalline state]

FIG. 4 is an XRD profile of the P-C negative electrode material and the P-C mixture. In FIG. 4, the horizontal axis indicates a diffraction angle ($2\theta$, °), and the vertical axis indicates a diffraction X-ray intensity (a.u.). In FIG. 4, a reference numeral A indicates a P-C negative electrode material, and a reference numeral X indicates a P-C mixture.

(XRD profile measurement conditions)

The XRD profile is measured under the following measurement conditions.

· Measurement equipment: a horizontal-sample multipurpose X-ray diffractometer Ultima IV (manufactured by Rigaku Corporation)
· Source: Cu K$\alpha$ ray
· Measurement range ($2\theta$): 10° to 90°
· Scan rate: 4 °/min
· Sampling: 0.02°
· Voltage: 40 kV, current: 40 mA

As shown in FIG. 4, in the P-C mixture, the carbon material and the black phosphorus each have a certain crystallinity and show a diffraction peak. On the other hand, in the P-C negative electrode material, the diffraction peak observed in the P-C mixture was not observed, and only noise was confirmed in the entire measurement range. That is, from the results shown in FIG. 4, it is considered that, in the P-C material, the crystallinity of the carbon material used as a raw material is lost and the carbon material is amorphous, or the carbon material is so fine that the crystalline state cannot be confirmed.

Here, in a case where the XRD profile of the P-C negative electrode material is measured under the above conditions, it is preferable that an intensity $I_{20}$ at $2\theta = 20°$, an intensity $I_{26.3}$ at $2\theta = 26.3°$, and an intensity $I_{40}$ at $2\theta = 40°$ in the XRD profile measured under the above conditions satisfy the following relational expressions (1) to (3).

$$|P|/|B| < 2 \ ... \ (1)$$

$$P = I_{26.3} - I_{40} \ ... \ (2)$$

$$B = (I_{20} - I_{40}) \times (26.3 - 40)/(20 - 40) \ldots (3)$$

In a case where the XRD profile is measured for the carbon material as a raw material, a peak of the carbon material appears at $2\theta = 26.3°$ corresponding to a peak of graphite (002). On the other hand, in the XRD profile of a typical carbon material, there is no peak at $2\theta = 20°$ or $2\theta = 40°$. Therefore, in the expression (1), a reference point is set at $2\theta = 40°$, at which no peak of the carbon material is present, and a state of the carbon material can be determined by comparing the intensity at the reference point in an XRD profile with an intensity at a position ($2\theta = 26.3°$) at which a peak of the carbon material of a raw material is present.

The "P" represented by the expression (2) is the difference between an intensity $I_{40}$ of the reference point and an intensity $I_{26.3}$ at a position where a peak of the carbon material is present, and indicates the difference of the peak from the reference point.

The "B" represented by the expression (3) indicates a baseline intensity at $2\theta = 26.3°$ estimated from two positions ($2\theta = 20°$ and $2\theta = 40°$) where there is no peak.

A ratio of the peak intensity to the baseline intensity from the reference point is obtained from a ratio ($|P|/|B|$) of an absolute value of P to an absolute value of B, represented by the expression (1). In a case where IPI/IBI is 2 or more, it indicates that the peak of the carbon material is present.

On the other hand, in a case where $|P|/|B|$ is less than 2 and the expression (1) is satisfied, it can be determined that the peak of the carbon material is reduced, the crystallinity of the carbon material is decreased, and the carbon material is amorphous or the carbon material is so fine that the crystalline state cannot be confirmed. Therefore, the P-C negative electrode material preferably satisfies the above-described requirements for the [Behavior with respect to heat] and the above-described relational expressions (1) to (3).

As described above, the P-C negative electrode material is a new substance in which the behavior with respect to heat, the bonding state, the appearance, and the crystalline state are all different from those of a mixture obtained by mixing phosphorus (black phosphorus in FIGS. 1 to 4) and a carbon material as raw materials.

<<Method 1 for manufacturing a phosphorus-carbon composite negative electrode material>>

The P-C negative electrode material can be manufactured by a manufacturing method including a step of manufacturing a P-C material containing a phosphorus material and a carbon material, a step of mixing the obtained P-C material and a binder resin to obtain a mixed powder, a step of mixing the mixed powder and a solvent, and a drying step.

[Step of obtaining P-C material]

In this step, the phosphorus material and the carbon material are mixed to obtain a P-C material. It is preferable that the phosphorus material and the carbon material are mixed by a mixed pulverization treatment with compression.

As the carbon material as a raw material, at least one selected from the group consisting of amorphous carbon, graphite, porous carbon, mesocarbon microbeads (MCMB), fullerene, carbon nanotube, graphene, graphene oxide, carbon nitride ($C_3N_4$), and laminated carbon nanofibers (carbon nanofibers platelets) can be used. All of these carbon materials have a graphite structure.

Examples of the amorphous carbon include carbon black (CB), acetylene black (AB), Ketjen black, hard carbon, and soft carbon.

Examples of the fullerene include $C_{60}$, $C_{72}$, $C_{84}$, and the like.

Examples of the carbon nanotube include a single-walled carbon nanotube (SWCNT), a multi-walled carbon nanotube (MWCNT), a cup-stacked carbon nanotube (CSCNT), and a vapor-grown carbon fiber (VGCF). These have a structure (one-dimensional structure) extending in a one-axis direction.

Graphene, graphene oxide, carbon nitride ($C_3N_4$), and laminated carbon nanofibers (carbon nanofibers platelets) have a structure (two-dimensional structure) extending in a plane direction.

In the carbon material, an end portion (edge site) of the graphite structure has higher activity than a portion other than an edge. Therefore, it is assumed that many P-C bonds are formed at the edge site of the carbon material. Therefore, from the viewpoint of easily forming a P-C bond, the carbon material to be used is preferably a material having a large number of edge sites.

Examples of the carbon material having a large number of edge sites include CSCNT, graphite, mesocarbon microbeads (MCMB), graphene, graphene oxide, carbon nitride ($C_3N_4$), and laminated carbon nanofibers. Among these, CSCNT is preferable as the carbon material.

In addition, any known phosphorus allotrope can be used as the phosphorus as a raw material. Among the phosphorus allotropes, black phosphorus which is chemically most stable and a good conductor of electricity is preferable as the phosphorus.

The "mixed pulverization treatment with compression" is a treatment of applying a compression force to a plurality of types of powder raw materials to mix and pulverize the raw materials. It is considered that, by subjecting the carbon material and the phosphorus to the mixed pulverization treatment with compression, a strong impact force is applied to the carbon material and the phosphorus, thereby mixing and pulverizing the raw material powder at the same time, and causing a chemical change that cannot be obtained in a normal mixture. As a result, it is considered that a P-C material in which a P-C bond not present in the raw material is formed and a crystalline state observed in the raw material is not observed is obtained as a product.

The "mixed pulverization treatment with compression" is preferably performed until a peak derived from the raw material disappears in the XRD profile of the mixed material. Alternatively, the mixed pulverization treatment with compression is preferably performed until it can be confirmed that the P-C bond is generated in the XPS spectrum of the mixed material.

Examples of a treatment device (pulverizer) capable of performing the mixed pulverization treatment with compression include a roller mill, a jet mill, a hammer mill, a pin mill, a disc mill, a rod mill, a ball mill, a vibration mill, an attritor, and a beads mill. In the manufacturing of the P-C material, it is preferable to use a stirring pulverizer including a pulverization container and a rotating body, in particular, from the viewpoint that mixing and pulverization can be performed at the same time. Examples of the stirring pulverizer include a pin mill, a disc mill, a rod mill, a ball mill, a vibration mill, an attritor, and a beads mill.

Furthermore, since the treatment device can mix and pulverize the raw material powder at the same time and apply a strong impact force to the carbon material and the phosphorus, a stirred media pulverizer is preferable. Examples of the stirred media pulverizer include a ball mill, a vibration mill, an attritor, and a beads mill. Among these, from the viewpoint that the property conditions can be easily controlled, particularly preferred examples of the pulverizer include a ball mill.

According to the ball-mill mixing, it is considered that first, the phosphorus is finely pulverized and the carbon material is decomposed, and then the P-C bond is formed. In the process of the ball-mill mixing, the phosphorus forms the above-described core particles.

Thereafter, it is considered that the above-described carbon film is formed around the core particle containing the phosphorus atom while being composited, and the P-C material is obtained.

In a case of the ball-mill mixing, the manufacturing conditions can be controlled by adjusting the rotational speed of the ball mill device, the amount of the medium (ball) with respect to the raw material (ball powder ratio), and the mixing time. That is, by adjusting the conditions such as increasing the rotational speed of the ball mill device, increasing the amount of the medium with respect to the raw material, and increasing the mixing time, the mixing of the phosphorus with the carbon material is promoted and the P-C material is easily obtained. By controlling the manufacturing conditions, the generation of the P-C bond is promoted, and it is easy to generate the P-C negative electrode material in which $WL_{620}ML_{780}$ satisfies 0.1 or more and 0.9 or less.

The ball is a pulverization medium for pulverizing a metal material. The diameter of the ball is an average particle diameter of the ball. The ball is pulverized into particles having a smaller average particle diameter by flowing at a high speed in the pulverization container by the rotation of the pulverization container itself of the pulverizer and colliding with the powder raw material containing the carbon material and the phosphorus. In the pulverization step, it is preferable that the pulverization container and the beads are not excessively worn. Therefore, the shape of the ball is preferably spherical or ellipsoidal.

The diameter of the ball is preferably larger than an average particle diameter of the P-C material after pulverization. Since by using such a ball, a large pulverization energy can be imparted to the metal material, the metal particles can be efficiently obtained in a short time.

The diameter of the ball is preferably 0.1 to 10 mm and more preferably 1 to 10 mm. In a case where the diameter of the ball is in this range, the generation of the P-C bond is promoted, and the reaggregation can be suppressed. The diameter of the ball to be put into the pulverization container may be uniform or different.

Examples of a material of the ball include glass, agate, alumina, zirconia, stainless steel, chrome steel, tungsten carbide, silicon carbide, and silicon nitride. Among these, zirconia is preferably used because it has a relatively high hardness and is less likely to be worn, and has a relatively large specific gravity and can obtain a large pulverization energy. By using these balls, the raw material powder of the P-C material can be efficiently pulverized.

The weight ratio of the ball to the raw material powder of the P-C material is defined as a ball powder ratio. By increasing the ball powder ratio, a strong impact force can be imparted to the raw material powder of the P-C material at a high frequency, so that the generation of the P-C bond can be further promoted. In a case where the ball powder ratio is too high, the manufacturing amount of the P-C negative electrode material per unit operation decreases. Therefore, the preferred ball powder ratio is 0.5 to 500, more preferably 1 to 200, and still more preferably 10 to 200.

In addition, after the ball-mill mixing is finished, the ball is separated from the P-C material using a filter or the like.

The fact that the above-described P-C material is obtained by the ball-mill mixing can be confirmed by measuring the XRD profile of the mixed material and confirming that the peak derived from the raw material disappears as shown in FIG. 3. The continuous time of the ball-mill mixing may be determined by performing a preliminary experiment on the correspondence relationship between the mixing time and the time until the peak derived from the raw material disappears. In other words, the ball-mill mixing may be performed until the peak derived from the raw material disappears in the XRD profile of the mixed material.

Alternatively, the occurrence of the P-C bond may be confirmed by measuring the XPS spectrum of the mixed material as shown in FIG. 1. In this case, the continuous time of the ball-mill mixing may be determined by performing a preliminary experiment on the correspondence relationship between the mixing time and the time until the P-C bond is generated. In other words, the ball-mill mixing may be performed until the P-C bond is generated in the XPS spectrum of the mixed material can be confirmed.

In the ball-mill mixing, the carbon material or the phosphorus is interposed between the collision of the media or the collision between the media and the ball milling container, whereby a strong impact (pressure) is locally applied to the carbon material or the phosphorus. Although the details are not clear, it is considered that the chemical change that cannot be obtained in a normal mixture occurs by applying such an impact, a P-C bond not present in the raw material is formed, and a P-C material in which a crystalline state observed in the raw material is not observed is obtained.

[Step of obtaining mixed powder]

The obtained P-C material and a binder resin are mixed to obtain a mixed powder. It is preferable that the step of mixing the P-C material and the binder resin is performed by a mixer such as a Henschel mixer, a planetary mixer, a Microspeed Mixer, or a Loedige mixer, or by the same method as the mixed pulverization treatment with compression.

Examples of the binder resin include fluororesins such as polyvinylidene fluoride, polytetrafluoroethylene, a tetrafluoroethylene/hexafluoropropylene/vinylidene fluoride copolymer, a hexafluoropropylene/vinylidene fluoride copolymer, and a tetrafluoroethylene/perfluorovinyl ether copolymer; and polyolefin resins such as polyethylene and polypropylene.

The binder resin is preferably a fluorine-based resin and more preferably polyvinylidene fluoride.

As the mixing ratio of the binder resin increases, $D_{10}$ tends to increase. Therefore, in consideration of the battery characteristics, it is preferable to perform preparation such that the amount of the other components is in a range of 1% by mass or more and 15% by mass or less, 2% by mass or more and 12% by mass or less, and 2.5% by mass or more and 8% by mass or less with respect to the total amount of the other components other than the phosphorus atom and the carbon atom.

[Step of mixing mixed powder and solvent]

The obtained mixed powder and a solvent are mixed. The solvent is preferably an organic solvent, and examples of the organic solvent include amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone (hereinafter, may be referred to as NMP).

A mixing ratio of the mixed powder and the solvent can be appropriately adjusted to be in a range of 1:9 to 9:1. As the solvent ratio increases, a uniform coating can be performed, but as the amount of the solvent increases, the time required for drying increases, so that a range of 2:8 to 6:4 is preferable.

[Drying step]

After mixing with the solvent, the P-C negative electrode material having a coverage ratio of 0.1% or more and 5% or less is obtained by drying. The drying conditions are, for example, a drying temperature of 40°C to 280°C and a drying time of 1 minute to 24 hours.

After mixing with the solvent, the binder resin is easily fixed by drying, and $D_{10}$ is likely to be 1 μm or more.

<<Method 2 for manufacturing a phosphorus-carbon composite negative electrode material>>

The P-C negative electrode material can be manufactured by a manufacturing method including a step of manufacturing a mixed powder containing a phosphorus material, a carbon material, and a binder resin, a step of mixing the obtained mixed powder and a solvent, and a drying step.

The description of the phosphorus material, the carbon material, and the binder resin in the method 2 for manufacturing a phosphorus-carbon composite negative electrode material is the same as that in the method 1 for manufacturing the phosphorus-carbon composite negative electrode material.

[Step of obtaining mixed powder]

The phosphorus material, the carbon material, and the binder resin are mixed by the method described in the "mixed pulverization treatment with compression" to obtain a mixed powder.

As the mixing ratio of the binder resin increases, $D_{10}$ tends to increase. Therefore, in consideration of the battery characteristics, it is preferable to perform preparation such that the amount of the other components is in a range of 1% by mass or more and 15% by mass or less, 2% by mass or more and 12% by mass or less, and 2.5% by mass or more and 8% by mass or less with respect to the total amount of the other components other than the phosphorus atom and the carbon atom.

[Step of mixing mixed powder and solvent]

The step is performed in the same manner as the [Step of mixing mixed powder and solvent] described in the method 1 for manufacturing a phosphorus-carbon composite negative electrode material.

[Drying step]

The step is performed in the same manner as the drying step described in the method 1 for manufacturing a phosphorus-carbon composite negative electrode material.

<<Method 3 for manufacturing a phosphorus-carbon composite negative electrode material>>

In the method for manufacturing a phosphorus-carbon composite negative electrode material, an aqueous binder resin can be used as the binder resin. The aqueous binder resin is an aqueous dispersion liquid of the binder resin, and examples thereof include styrene butadiene rubber (SBR), carboxymethyl cellulose (CMC), an acrylic resin, and the like.

In a case where the aqueous binder is used, in a case where the P-C material is manufactured by the method described in <<Method 1 for manufacturing a phosphorus-carbon composite negative electrode material>> and then the P-C material is coated with the aqueous binder, $D_{10}$ of the P-C negative electrode material is likely to be 1 $\mu$m or more. In this case, a higher concentration of the aqueous dispersion liquid of the aqueous binder resin is preferable because the drying time becomes shorter, but the concentration of the aqueous dispersion liquid of the aqueous binder resin is preferably adjusted to a viscosity that allows easy mixing with the mixture.

The mixing ratio of the mixed powder to the aqueous binder resin can be appropriately adjusted to be in a range of 1:99 to 90:10. As the solvent ratio increases, a uniform coating can be performed. From the viewpoint of shortening the drying time, the mixing ratio of the mixed powder to the aqueous binder resin is preferably in a range of 2:8 to 6:4.

[Drying step]

After mixing with the solvent, the P-C negative electrode material having a coverage ratio of 0.1% or more and 5% or less is obtained by drying. The drying conditions are, for example, a drying temperature of 40°C to 280°C and a drying time of 1 minute to 24 hours.

The binder resin is easily fixed by drying after mixing with the solvent, and a P-C negative electrode material having $D_{10}$ of 1 $\mu$m or more is obtained.

<<Method 4 for manufacturing a phosphorus-carbon composite negative electrode material>>

After manufacturing the P-C material by the method described in <<Method 1 for manufacturing a phosphorus-carbon composite negative electrode material>>, the P-C material is sieved to remove the fine powder, whereby $D_{10}$ of the P-C negative electrode material can be controlled to 1 $\mu$m or more.

<Negative electrode active material>

The negative electrode active material according to the present embodiment includes the above-described P-C negative electrode material.

The negative electrode active material may be used alone as the above-described P-C material, or may include a known material used as a negative electrode active material in addition to the P-C material. Examples of such a material include (i) a carbon material capable of intercalation and deintercalation of lithium ions, (ii) an alloy-based negative electrode active material that accompanies formation of a lithium alloy phase, (iii) a transition metal oxide that undergoes a decomposition and re-formation reaction (conversion reaction) with lithiumn ions, and (iv) an oxide or a composite oxide having activity as a negative electrode active material.

(i) Examples of the carbon material include graphite, hard carbon, soft carbon, and a carbon nanotube.
(ii) Examples of the alloy-based negative electrode active material include metals such as silicon, germanium, tin, aluminum, zinc, and magnesium, and alloys thereof.
(iii) Examples of the transition metal oxide include a manganese oxide, an iron oxide, a cobalt oxide, a nickel oxide, a copper oxide, and a magnesium oxide. These oxides may be composite metal oxides further containing other metals (for example, lithium).
(iv) Examples of the oxide or the composite oxide include titanium oxide, lithium titanate, and silicon oxide.

<Negative electrode for lithium secondary battery>

The negative electrode for a lithium secondary battery according to the present embodiment includes the above-described negative electrode active material. The negative electrode for a lithium secondary battery includes a collector and a binder for fixing the negative electrode active material to the collector, in addition to the negative electrode active material. The collector and the binder can adopt a known configuration.

As a material of the collector, copper or a copper alloy can be suitably used.

As the binder, a mixture of one or two or more of polyvinylidene fluoride (hereinafter, may be referred to as PVdF), polyimide, polyamide-imide, styrene butadiene rubber, carboxymethyl cellulose, and an acrylic resin can be suitably used.

<Lithium secondary battery>

The lithium secondary battery according to the present embodiment includes the above-described negative electrode for a lithium secondary battery (hereinafter, referred to as a negative electrode).

An example of a suitable lithium secondary battery in a case of using the negative electrode active material according to the present embodiment includes a positive electrode and a negative electrode, a separator interposed between the positive electrode and the negative electrode, and an electrolytic solution disposed between the positive electrode and the negative electrode.

An example of the lithium secondary battery includes a positive electrode and a negative electrode, a separator interposed between the positive electrode and the negative electrode, and an electrolytic solution disposed between the positive electrode and the negative electrode.

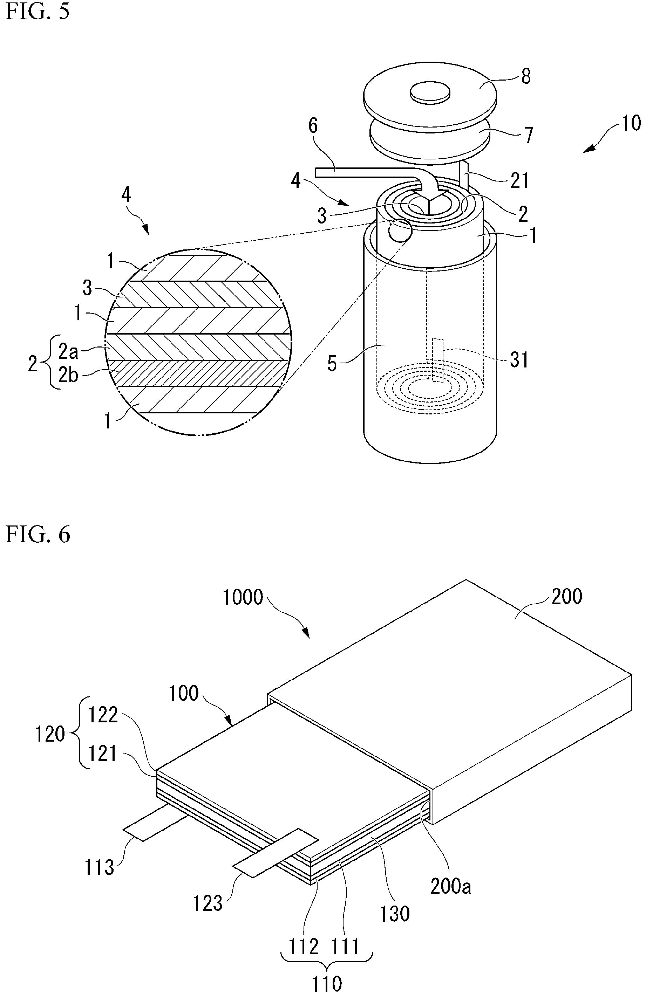

FIG. 5 is a schematic view showing an example of the lithium secondary battery. For example, a cylindrical lithium secondary battery 10 is manufactured as follows.

First, as shown in the enlarged view of FIG. 5, a pair of separators 1 having a band shape, a band-shaped positive electrode 2 having a positive electrode lead 21 at one end, and a band-shaped negative electrode 3 having a negative electrode lead 31 at one end are laminated in an order of the separator 1, the positive electrode 2, the separator 1, and the negative electrode 3, and wound to form an electrode group 4.

The positive electrode 2 includes, as an example, a positive electrode active material layer 2a including a positive electrode active material (hereinafter, CAM) and a positive electrode collector 2b on which the positive electrode active material layer 2a is formed on one surface. Such a positive electrode 2 can be manufactured by first preparing a positive electrode mixture including the CAM, a conductive material, and a binder, and carrying the positive electrode mixture on one surface of the positive electrode collector 2b to form the positive electrode active material layer 2a.

The negative electrode 3 can include, as an example, an electrode in which a negative electrode mixture including a negative electrode active material (not shown) is carried on a negative electrode collector, and an electrode consisting of the negative electrode active material alone, and can be manufactured by the same method as the positive electrode 2.

Next, the electrode group 4 and an insulator (not shown) are accommodated in a battery can 5, the can bottom is sealed, the electrode group 4 is impregnated with an electrolytic solution 6, and an electrolyte is disposed between the positive electrode 2 and the negative electrode 3. Furthermore, the lithium secondary battery 10 can be manufactured by sealing an upper portion of the battery can 5 with a top insulator 7 and a sealing body 8.

Examples of the shape of the electrode group 4 include a columnar shape in which a cross-sectional shape in a case where the electrode group 4 is cut in a direction perpendicular to a winding axis is a circle, an ellipse, a rectangle, or a rectangle with rounded corners.

In addition, as the shape of the lithium secondary battery including the electrode group 4, a shape defined in IEC60086 or JIS C 8500, which is a standard for a battery defined by the International Electrotechnical Commission (IEC), can be adopted. Examples thereof include a cylindrical type or a prismatic type.

Furthermore, the lithium secondary battery is not limited to the above-described wound configuration, and may have a laminated configuration in which a positive electrode, a separator, a negative electrode, and a separator are repeatedly laminated. Examples of the laminated lithium secondary battery include a so-called coin-type battery, a button-type battery, and a paper-type (or sheet-type) battery.

For the positive electrode, the separator, the negative electrode, and the electrolytic solution constituting the lithium secondary battery, for example, the configurations, the materials, and the manufacturing methods described in [0113] to [0140] of WO2022/113904A1 can be used.

<All-solid-state lithium secondary battery>

Next, an all-solid-state lithium secondary battery having the above-described negative electrode will be described while describing the configuration of the all-solid-state lithium secondary battery.

FIG. 6 is a schematic view showing an example of the all-solid-state lithium secondary battery. An all-solid-state lithium secondary battery 1000 shown in FIG. 6 includes a laminate 100 including a positive electrode 110, a negative electrode 120, and a solid electrolyte layer 130, and an exterior body 200 that accommodates the laminate 100. In addition, the all-solid-state lithium secondary battery 1000 may have a bipolar structure in which the CAM and the negative electrode active material are disposed on both sides of the collector. Specific examples of the bipolar structure include a structure described in JP-A-2004-95400.

The positive electrode 110 includes a positive electrode active material layer 111 and a positive electrode collector 112. The positive electrode active material layer 111 includes the above-described CAM and the solid electrolyte. In addition, the positive electrode active material layer 111 may include a conductive material and a binder.

The negative electrode 120 includes a negative electrode active material layer 121 and a negative electrode collector 122. The negative electrode active material layer 121 includes the negative electrode active material. In addition, the negative electrode active material layer 121 may include a solid electrolyte and a conductive material.

The laminate 100 may have an external terminal 113 connected to the positive electrode collector 112 and an external terminal 123 connected to the negative electrode collector 122. In addition, the all-solid-state lithium secondary battery 1000 may have a separator between the positive electrode 110 and the negative electrode 120.

The all-solid-state lithium secondary battery 1000 further includes an insulator (not shown) that insulates the laminate 100 and the exterior body 200 and a sealing body (not shown) that seals an opening portion 200a of the exterior body 200.

As the exterior body 200, a container molded of a metal material having high corrosion resistance, such as aluminum, stainless steel, or nickel-plated steel, can be used. In addition, as the exterior body 200, a container formed by processing a laminate film, on at least one surface of which an anti-corrosion treatment has been performed, into a bag shape may also be used.

Examples of the shape of the all-solid-state lithium secondary battery 1000 include a coin type, a button type, a paper type (or a sheet type), a cylindrical type, a prismatic type, and a laminate type (pouch type).

In the all-solid-state lithium secondary battery 1000, an embodiment having one laminate 100 is shown as an example, but the present embodiment is not limited thereto. The all-solid-state lithium secondary battery 1000 may have a configuration in which the laminate 100 is a unit cell and a plurality of unit cells (laminate 100) are sealed inside the exterior body 200.

For the all-solid-state lithium secondary battery, for example, the configurations, the materials, and the manufacturing methods described in [0141] to [0181] of WO2022/113904A1 can be used.

Examples

Hereinafter, the present invention will be described by Examples, but the present invention is not limited to these Examples.

<<Example 1>>

Black phosphorus manufactured by Rasa Industries, Ltd., cup-stacked carbon nanotubes (CSCNT: manufactured by GSI Creos Corporation), and PvdF (KF polymer #9300: manufactured by Kureha Corporation) were weighed at a mass ratio of P:C:PVdF = 59:40:1 (total amount: 1.26 g), and were mixed using a ball mill under the following conditions to obtain a PVdF-containing P-C negative electrode material. The proportion of PVdF with respect to the total amount of the black phosphorus, the CSCNT, and the PVDF was 1% by mass.

(Ball-mill mixing conditions)

Apparatus: Retsch PM-100
Container: 125 mL container made of $ZrO_2$
Medium: 8 mm$\varphi$ ball made of $ZrO_2$, 150 g
Atmosphere: argon gas sealed
Sample amount: 1.26 g as a mixture of raw materials
Ball/powder ratio: 120 (weight ratio)
Mixing time: 12 hours

0.2 g of NMP was added to the obtained PVdF-containing P-C negative electrode material, and the mixture was kneaded in an agate mortar until PVdF was dissolved and uniform, and then dried at 80°C under vacuum to obtain a powder-like P-C negative electrode material 1 coated with PVdF.

As a result of measuring $D_{10}$ of the P-C negative electrode material 1 by the method described in [Method for measuring $D_{10}$], it was 1.84 $\mu$m.

A TEM photograph of the obtained P-C negative electrode material 1 was captured, and it was confirmed that the P-C negative electrode material 1 had a core-shell structure in which a surface of a core particle containing a phosphorus atom was covered with a carbon film.

The obtained P-C negative electrode material 1 was charged at a charging rate of 0.2C with lithium metal as a counter electrode. As a result, in the P-C material, the average charging potential with respect to the capacity (mAh/g) during charging was 0.1 V or more. It was confirmed that the obtained P-C material was a material that absorbs lithium ions when lithium (alkali metal) is used as a counter electrode and 0.1 V or more was applied.

In the obtained P-C negative electrode material 1, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 1 was equal to the raw material ratio.

In addition, in the obtained P-C negative electrode material 1, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by thermogravimetric analysis under the following conditions, was 0.29.

(Thermogravimetric analysis)

10 mg of the P-C negative electrode material 1 was accurately weighed to obtain a sample, and a weight change in a case where the sample is heated from 50°C to 780°C at a temperature rising rate of 10 °C/minute under a nitrogen flow is measured using a thermogravimetric analyzer. (Weight reduction ratio)

The proportion of the weight of the sample at the measurement temperature to the weight of the accurately weighed sample was defined as a weight reduction ratio (%) at the measurement temperature.

Furthermore, in the obtained P-C negative electrode material 1, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.04.

In a case where the obtained P-C negative electrode material 1 was measured in accordance with the above-described (XPS spectrum measurement conditions), a peak indicating a bond between a phosphorus atom and a carbon atom was confirmed.

The obtained P-C negative electrode material 1 was measured in accordance with the above-described (XRD profile measurement conditions), in the XRD profile, an intensity $I_{20}$ at $2\theta = 20°$ was 3,063, an intensity $I_{26.3}$ at $2\theta = 26.3°$ was 2,603, and an intensity $I_{40}$ at $2\theta = 40°$ was 1,917. In addition, $|P|/|B|$ was 0.87. The P-C negative electrode material 1 having these values satisfied the above-described expressions (1) to (3).

$$|P|/|B| < 2 \ ... \ (1)$$

$$P = I_{26.3} - I_{40} \ ... \ (2)$$

$$B = (I_{20} - I_{40}) \times (26.3 - 40)/(20 - 40) \ ... \ (3)$$

<<Example 2>>

A P-C negative electrode material 2 was manufactured by the same method as in Example 1, except that the proportion of PVdF with respect to the total amount of the black phosphorus, the CSCNT, and the PVdF was changed to 3% by mass. $D_{10}$ of the P-C negative electrode material 2 was 2.96 $\mu$m.

The obtained P-C negative electrode material 2 was charged at a charging rate of 0.2C with lithium metal as a counter electrode. As a result, the average charging potential of the P-C negative electrode material 2 with respect to the capacity (mAh/g) during charging was 0.1 V or more. It was confirmed that the obtained P-C negative electrode material 2 was a material that absorbs lithium ions when lithium (alkali metal) is used as a counter electrode and 0.1 V or more was applied.

In the obtained P-C negative electrode material 2, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 2 was equal to the raw material ratio.

In addition, in the obtained P-C negative electrode material 2, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermogravimetric analysis as in Example 1, was 0.52.

Furthermore, in the obtained P-C negative electrode material 2, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.06.

In a case where the obtained P-C negative electrode material 2 was measured in accordance with the above-described (XPS spectrum measurement conditions), a peak indicating a bond between a phosphorus atom and a carbon atom was confirmed.

The obtained P-C negative electrode material 2 was measured in accordance with the above-described (XRD profile measurement conditions), in the XRD profile, an intensity $I_{20}$ at $2\theta = 20°$ was 3280, an intensity $I_{26.3}$ at $2\theta = 26.3°$ was 2663, and an intensity $I_{40}$ at $2\theta = 40°$ was 1873. In addition, |P|/|B| was 0.82. The P-C negative electrode material 2 having these values satisfied the above-described expressions (1) to (3).

<<Example 3>>

A P-C negative electrode material 3 was manufactured by the same method as in Example 1, except that the proportion of PVdF with respect to the total amount of the black phosphorus, the CSCNT, and the PVdF was changed to 6% by mass. $D_{10}$ of the P-C negative electrode material 3 was 3.24 $\mu$m.

The obtained P-C negative electrode material 3 was charged at a charging rate of 0.2C with lithium metal as a counter electrode. As a result, the average charging potential of the P-C negative electrode material 3 with respect to the capacity (mAh/g) during charging was 0.1 V or more. It was confirmed that the obtained P-C negative electrode material 3 was a material that absorbs lithium ions when lithium (alkali metal) is used as a counter electrode and 0.1 V or more was applied.

In the obtained P-C negative electrode material 3, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 3 was equal to the raw material ratio.

In addition, in the obtained P-C negative electrode material 3, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermo gravimetric analysis as in Example 1, was 0.38.

Furthermore, in the obtained P-C negative electrode material 3, a ratio $WL_{300}/WL_{600}$ of a weight reduction ratio $WL_{300}$ at a measurement temperature of 300°C and a weight reduction ratio $WL_{600}$ at a measurement temperature of 600°C, which are obtained by thermogravimetric analysis, was 0.12.

In a case where the obtained P-C negative electrode material 3 was measured in accordance with the above-described (XPS spectrum measurement conditions), a peak indicating a bond between a phosphorus atom and a carbon atom was confirmed.

The obtained P-C negative electrode material 3 was measured in accordance with the above-described (XRD profile measurement conditions), in the XRD profile, an intensity $I_{20}$ at $2\theta = 20°$ was 2,993, an intensity $I_{26.3}$ at $2\theta = 26.3°$ was 2,500, and an intensity $I_{40}$ at $2\theta = 40°$ was 1,707. In addition, |P|/|B| was 0.90. The P-C negative electrode material 3 having these values satisfied the above-described expressions (1) to (3).

<<Example 4>>

A P-C negative electrode material 4 was manufactured by the same method as in Example 1, except that the proportion of PVdF with respect to the total amount of the black phosphorus, the CSCNT, and the PVdF was changed to 10% by mass. $D_{10}$ of the P-C negative electrode material 4 was 3.32 $\mu$m.

The obtained P-C negative electrode material 4 was charged at a charging rate of 0.2C with lithium metal as a counter electrode. As a result, the average charging potential of the P-C negative electrode material 4 with respect to the capacity (mAh/g) during charging was 0.1 V or more. It was confirmed that the obtained P-C negative electrode material 4 was a material that absorbs lithium ions when lithium (alkali metal) is used as a counter electrode and 0.1 V or more was applied.

In the obtained P-C negative electrode material 4, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 4 was equal to the raw material ratio.

In addition, in the obtained P-C negative electrode material 4, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermogravimetric analysis as in Example 1, was 0.53.

Furthermore, in the obtained P-C negative electrode material 4, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.08.

In a case where the obtained P-C negative electrode material 4 was measured in accordance with the above-described (XPS spectrum measurement conditions), a peak indicating a bond between a phosphorus atom and a carbon atom was confirmed.

The obtained P-C negative electrode material 4 was measured in accordance with the above-described (XRD profile measurement conditions), in the XRD profile, an intensity $I_{20}$ at $2\theta = 20°$ was 3,240, an intensity $I_{26.3}$ at $2\theta = 26.3°$ was 2,680, and an intensity $I_{40}$ at $2\theta = 40°$ was 1,900. In addition, IPI/IBI was 0.85. The P-C negative electrode material 4 having these values satisfied the above-described expressions (1) to (3).

<<Example 5>>

Black phosphorus manufactured by Rasa Industries, Ltd. and a cup-stacked carbon nanotube (CSCNT: manufactured by GSI Creos Corporation) were weighed at a mass ratio of P:C = 6:4 (total amount: 1.25 g), and were mixed using a ball mill under the following conditions to obtain a P-C negative electrode material.

(Ball-mill mixing conditions)

Apparatus: Retsch PM-100
Container: 125 mL container made of $ZrO_2$
Medium: 8 mm$\varphi$ ball made of $ZrO_2$, 150 g
Atmosphere: argon gas sealed
Sample amount: 1.25 g as a mixture of raw materials
Ball/powder ratio: 120 (weight ratio)
Mixing time: 12 hours

0.13 g of a 48% SBR latex solution was added to 1 g of the obtained P-C negative electrode material, and the mixture was kneaded in an agate mortar, and then dried at 80°C under vacuum to obtain a powder-like P-C negative electrode material 5 coated with SBR. A proportion of SBR with respect to the total amount of the black phosphorus, the CSCNT, and the SBR was 6% by mass.

$D_{10}$ of the P-C negative electrode material 5 was more than 100 $\mu$m.

The obtained P-C negative electrode material 5 was charged at a charging rate of 0.2C with lithium metal as a counter electrode. As a result, the average charging potential of the P-C negative electrode material 5 with respect to the capacity (mAh/g) during charging was 0.1 V or more. It was confirmed that the obtained P-C negative electrode material 5 was a material that absorbs lithium ions when lithium (alkali metal) is used as a counter electrode and 0.1 V or more was applied.

In the obtained P-C negative electrode material 5, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 5 was equal to the raw material ratio.

In addition, in the obtained P-C negative electrode material 5, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermogravimetric analysis as in Example 1, was 0.77.

Furthermore, in the obtained P-C negative electrode material 5, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.02.

In a case where the obtained P-C negative electrode material 5 was measured in accordance with the above-described (XPS spectrum measurement conditions), a peak indicating a bond between a phosphorus atom and a carbon atom was confirmed.

The obtained P-C negative electrode material 5 was measured in accordance with the above-described (XRD profile measurement conditions), in the XRD profile, an intensity $I_{20}$ at $2\theta = 20°$ was 4,111, an intensity $I_{26.3}$ at $2\theta = 26.3°$ was 3,177, and an intensity $I_{40}$ at $2\theta = 40°$ was 1,956. In addition, $|P|/|B|$ was 0.83. The P-C negative electrode material 4 having these values satisfied the above-described expressions (1) to (3).

<<Comparative Example 1>>

Black phosphorus manufactured by Rasa Industries, Ltd. was used as a P-C negative electrode material 11. $D_{10}$ of the P-C negative electrode material 11 was 4.50 $\mu$m.

In addition, in the obtained P-C negative electrode material 11, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermogravimetric analysis as in Example 1, was 0.99.

Furthermore, in the obtained P-C negative electrode material 11, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.01.

<<Comparative Example 2>>

Black phosphorus manufactured by Rasa Industries, Ltd. and a cup-stacked carbon nanotube (CSCNT: manufactured by GSI Creos Corporation) were weighed at a mass ratio of P:C = 6:4 (total amount: 0.5 g), and were mixed using a ball mill under the following conditions to obtain a P-C negative electrode material 12.

(Ball-mill mixing conditions)

Apparatus: Retsch PM-100
Container: 50 mL container made of $ZrO_2$
Medium: 5 mm$\varphi$ ball made of $ZrO_2$, 60 g
Atmosphere: argon gas sealed
Sample amount: 0.5 g as a mixture of raw materials
Ball/powder ratio: 120 (weight ratio)
Mixing time: 12 hours

$D_{10}$ of the P-C negative electrode material 12 was 0.70 $\mu$m.

The obtained P-C negative electrode material 12 was charged at a charging rate of 0.2 C with lithium metal as a counter electrode. As a result, the average charging potential of the P-C negative electrode material 5 with respect to the capacity (mAh/g) during charging was 0.1 V or more. It was confirmed that the obtained P-C negative electrode material 5 was a material that absorbs lithium ions when lithium (alkali metal) is used as a counter electrode and 0.1 V or more was applied.

In the obtained P-C negative electrode material 12, the amount of the phosphorus atom was 60% by mass, and the amount of the carbon atom was 40% by mass. Since the airtightness of the container used in the above-described manufacturing was extremely high, it was determined that the amount of each atom in the P-C negative electrode material 12 was equal to the raw material ratio.

In addition, in the obtained P-C negative electrode material 12, a ratio $WL_{620}/WL_{780}$ of a weight reduction ratio $WL_{620}$ at a measurement temperature of 620°C and a weight reduction ratio $WL_{780}$ at a measurement temperature of 780°C, which were determined by the same thermogravimetric analysis as in Example 1, was 0.51.

Furthermore, in the obtained P-C negative electrode material 12, a ratio $WL_{300}/WL_{600}$ of a weight reduction ratio $WL_{300}$ at a measurement temperature of 300°C and a weight reduction ratio $WL_{600}$ at a measurement temperature of 600°C, which were determined by thermogravimetric analysis, was 0.06.

In a case where the obtained P-C negative electrode material 12 was measured in accordance with the above-described (XPS spectrum measurement conditions), a peak indicating a bond between a phosphorus atom and a carbon atom was confirmed.

The obtained P-C negative electrode material 12 was measured in accordance with the above-described (XRD profile measurement conditions), in the XRD profile, an intensity $I_{20}$ at $2\theta = 20°$ was 3,662, an intensity $I_{26.3}$ at $2\theta = 26.3°$ was 2,949, and an intensity $I_{40}$ at $2\theta = 40°$ was 1,864. In addition, $|P|/|B|$ was 0.88. The P-C negative electrode material 12 having these values satisfied the above-described expressions (1) to (3).

[Ignition test]

The following cerium-iron spark method was used to perform an ignition test on the P-C negative electrode materials 1 to 5 manufactured in Examples 1 to 5 and the P-C negative electrode materials 11 and 12 manufactured in Comparative Examples 1 and 2.

[Cerium-iron spark method]

0.3 g of the P-C negative electrode material was piled up in a conical shape on a heat-insulating board (Isowool Board 1300S), and a spark was applied to the P-C negative electrode material from a distance of about 1 cm using a Rock lighter (cerium-iron) manufactured by Seiwa Sangyo Co., Ltd. to confirm the presence or absence of flammability. The test was repeated 10 times, and it was determined as no ignition in a case where the P-C negative electrode material did not ignite even once, and it was evaluated as ignition in a case where the P-C negative electrode material ignited once or more.

Table 1 shows the results of the ignition test and the value of $D_{10}$ for Examples 1 to 5 and Comparative Examples 1 and 2.

[Table 1]

|  | $D_{10}$ [μm] | Ignition test |
|---|---|---|
| Example 1 | 1.84 | No ignition |
| Example 2 | 2.96 | No ignition |
| Example 3 | 3.24 | No ignition |
| Example 4 | 8.32 | No ignition |
| Example 5 | >100 | No ignition |
| Comparative Example 1 | 4.5 | Ignition |
| Comparative Example 2 | 0.7 | Ignition |

As shown in Table 1, in Examples 1 to 5 in which $D_{10}$ was 1 μm or more, it was confirmed that the result of the ignition test was no ignition and the phosphorus-carbon composite negative electrode material had high safety.

In Comparative Example 1, since the material was not a phosphorus-carbon composite negative electrode material but a powder of black phosphorus alone, it was ignited.

In Comparative Example 2, since the material was a phosphorus-carbon composite negative electrode material, but the fine powder was large because $D_{10}$ was less than 1 μm, it is considered that the material was ignited.

(Production of evaluation battery)

(1) Production of negative electrode

The P-C negative electrode material, the conductive material, and the binder were weighed to obtain a mixture of [P-C negative electrode material]:[conductive material]:[binder] = 80:10:10 (mass ratio).

The used materials were as follows.

Binder: fluorinated vinylidene PVdF Kureha KF Polymer #1100 (manufactured by Kureha Corporation)
Conductive material: acetylene black, Denka Black HS100 (manufactured by Denka Company Limited)

The above-described mixture and a solvent (N-methyl-2-pyrrolidone (NMP)) were kneaded using an agate mortar to produce a negative electrode slurry. In this case, the slurry concentration was adjusted, and the amount of the negative electrode active material (the total of the P-C negative electrode material or the P-C mixture, the conductive material, and the binder) in the negative electrode slurry was set to 30 to 60% by mass.

The negative electrode slurry was applied onto a copper foil collector using a doctor blade, and then dried by blowing air at 120°C for 1 hour to remove the solvent, thereby obtaining a laminate. After the obtained laminate was pressed at 10 MPa for 10 seconds, the laminate was further dried under vacuum at 120°C for 12 hours to obtain a negative electrode.

It is noted that the above-described production of the negative electrode slurry and the production of the above-described negative electrode were performed in a glove box of an argon atmosphere.

(2) Production of lithium ion secondary battery

A lithium ion secondary battery (coin-type battery R2032) was produced by combining the negative electrode produced in (1), the counter electrode, the electrolytic solution, and the separator. The battery was assembled in a glove box of an argon atmosphere.

A lithium metal foil was used as the counter electrode.

As the electrolytic solution, a mixed solution in which 10% by mass of fluoroethylene carbonate (FEC) was added to a $LiPF_6$ solution (manufactured by KISHIDA CHEMICAL Co.,Ltd.) was used.

As the $LiPF_6$ solution, a solution in which $LiPF_6$ was dissolved at a concentration of 1 mol/L in a mixed solvent of ethylene carbonate (EC), diethyl carbonate (DEC), and ethyl methyl carbonate (EMC) at a volume ratio of 30:35:35 was used.

As the separator, a laminated film separator (16 $\mu$m thick) in which a heat-resistant porous layer was laminated on a porous film made of polyethylene was used.

(Evaluation 1. discharge capacity)

Using the evaluation battery, a charge and discharge test was performed under the following conditions at 25°C. Here, assuming that the theoretical capacity of phosphorus was 2,600 mAh/g and the actual capacity of the P-C negative electrode material was 1,800 mAh/g, a 1C current for charging or discharging the electrode capacity in 1 hour was set to 1,800 mA/g. The definition of 1C in Examples is the same as follows.

Minimum charge voltage: 0.005 V
Charge current: 0.1C (1C = 1,800 mA/g)
Maximum discharge voltage: 2.0 V
Discharge current: 0.1C (1C = 1,800 mA/g)

In Evaluation 1, a material having a discharge capacity of 500 mAh/g or more was judged as good, and a material having a discharge capacity of less than 500 mAh/g was defective. As a reference value, the theoretical discharge capacity of graphite as a carbon material was 372 mAh/g.

(Evaluation 2. cycle characteristics)

Using the evaluation battery, the cycle characteristics were evaluated by repeating charge and discharge under the following conditions at 25°C. The cycle characteristics were evaluated using a ratio (D100/D1) of the discharge capacity D100 at the 100th cycle to the charge capacity D1 at the first cycle in the 1C rate current. The larger the D100/D1 is, the higher the retention rate of the discharge capacity with the cycle is, whereby it can be determined that the negative electrode active material is excellent.

Minimum charge voltage: 0.005 V
Charge current: 1C (1C = 2,600 mA/g)
Maximum discharge voltage: 2.0 V
Discharge current: 1C (1C = 2,600 mA/g)

The discharge capacity and the cycle characteristics of the P-C negative electrode materials of Example 3, Example 4, Comparative Example 1, and Comparative Example 2 were evaluated.

As a result, the discharge capacity of the P-C negative electrode material 3 of Example 3 was 1,800 mAh/g, and the cycle characteristics (D100/D1) were 33%.

The discharge capacity of the P-C negative electrode material 4 of Example 4 was 800 mAh/g, and the cycle characteristics (D100/D1) were 26%.

In addition, the discharge capacity of the P-C negative electrode material 11 of Comparative Example 1 was 1,950 mAh/g, and the cycle characteristics (D100/D1) were 11%.

The discharge capacity of the P-C negative electrode material 12 of Comparative Example 2 was 1,800 mAh/g, and the cycle characteristics (D100/D1) were 85%.

From the results of the battery evaluation, the P-C negative electrode material 3 of Example 3 had a capacity of the same degree as the P-C negative electrode material 11 of Comparative Example 1. In addition, it was confirmed that the cycle characteristics of the P-C negative electrode material 3 of Example 3 were three times higher than those of the P-C negative electrode material 11 of Comparative Example 1.

It was confirmed that the P-C negative electrode material 4 of Example 4 having a discharge capacity of 500 mAh/g or more was good and the cycle characteristics of the P-C negative electrode material 4 of Example 4 were twice or more higher than those of the P-C negative electrode material 11 of Comparative Example 1.

The P-C negative electrode material 12 of Comparative Example 2 had no problem in the battery characteristics, but the safety was insufficient.

From the above results, it was confirmed that the P-C negative electrode material of the present embodiment had high safety and could have good battery characteristics.

As described above, it was confirmed that the present invention was useful.

REFERENCE SIGNS LIST

50 Particle
51 Core particle
52 Carbon film
100 Laminate
120 Negative electrode
121 Negative electrode active material layer
130 Solid electrolyte layer

**Claims**

1. A phosphorus-carbon composite negative electrode material containing a phosphorus atom and a carbon atom, wherein, in a volume-based cumulative particle size distribution curve obtained by a laser diffraction scattering type particle size distribution measurement method, $D_{10}$ is 1 $\mu$m or more, the $D_{10}$ being a value of a particle diameter at a 10% cumulative point from a fine particle side.

2. The phosphorus-carbon composite negative electrode material according to Claim 1,

   wherein a ratio WL620/WL780 of a weight reduction ratio WL620 at a measurement temperature of 620°C to a weight reduction ratio WL780 at a measurement temperature of 780°C, which are determined by thermogravimetric analysis under the following conditions, is 0.1 or more and 0.9 or less,
   (thermogravimetric analysis)
   10 mg of the phosphorus-carbon composite negative electrode material is accurately weighed to obtain a sample, and a weight change in a case where the sample is heated from 50°C to 780°C at a temperature rising rate of 10 °C/minute under a nitrogen flow is measured using a thermogravimetric analyzer,
   (weight reduction ratio)
   a proportion of a weight of the sample at the measurement temperature to a weight of the accurately weighed sample is defined as a weight reduction ratio (%) at the measurement temperature.

3. The phosphorus-carbon composite negative electrode material according to Claim 1 or 2, wherein an XPS spectrum has a peak indicating a bond between a phosphorus atom and a carbon atom.

4. The phosphorus-carbon composite negative electrode material according to Claim 1 or 2, wherein, in an XRD profile measured using a Cu K$\alpha$ ray, an intensity I20 at $2\theta = 20°$, an intensity I26.3 at $2\theta = 26.3°$, and an intensity 140 at $2\theta = 40°$ satisfy the following expressions (1) to (3),

$$|P|/|B| < 2 \ ... \ (1)$$

$$P = I_{26.3} - I_{40} \ ... \ (2)$$

$$B = (I_{20} - I_{40}) \times (26.3 - 40)/(20 - 40) \ ... \ (3).$$

5. The phosphorus-carbon composite negative electrode material according to Claim 1 or 2, comprising:

    a core particle containing a phosphorus atom; and
    a carbon film covering a surface of the core particle.

6. A negative electrode active material comprising:
the phosphorus-carbon composite negative electrode material according to Claim 1 or 2.

7. A negative electrode for a lithium secondary battery, comprising:
the negative electrode active material according to Claim 6.

8. A lithium secondary battery comprising:
the negative electrode for a lithium secondary battery according to Claim 7.

FIG. 1

FIG. 2

FIG. 3

FIG. 4

FIG. 5

FIG. 6

## INTERNATIONAL SEARCH REPORT

| International application No. |
|---|
| **PCT/JP2024/027516** |

**A.    CLASSIFICATION OF SUBJECT MATTER**

*H01M 4/38*(2006.01)i; *C01B 25/00*(2006.01)i; *H01M 4/36*(2006.01)i
FI:    H01M4/38 Z; H01M4/36 C; H01M4/36 E; C01B25/00 Z

According to International Patent Classification (IPC) or to both national classification and IPC

**B.    FIELDS SEARCHED**

Minimum documentation searched (classification system followed by classification symbols)

H01M4/00-4/62; C01B25/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JDreamIII

**C.    DOCUMENTS CONSIDERED TO BE RELEVANT**

| Category* | Citation of document, with indication, where appropriate, of the relevant passages | Relevant to claim No. |
|---|---|---|
| A | JP 2023-95306 A (SUMITOMO CHEMICAL COMPANY, LIMITED) 06 July 2023 (2023-07-06) | 1-8 |
| A | CN 114914424 A (HUBEI XINGFA CHEMICALS GROUP CO., LTD.) 16 August 2022 (2022-08-16) | 1-8 |
| A | SUN, Jiantong et al., Core-Shell Structure of a Polypyrrole-Coated Phosphorus/Carbon Nanotube Anode for High-Performance Lithium-Ion Batteries, Applied Energy Materials, 31 March 2021, 2021, 4, 4112-4118 | 1-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/027516**

| Patent document cited in search report | | | Publication date (day/month/year) | Patent family member(s) | | | Publication date (day/month/year) |
|---|---|---|---|---|---|---|---|
| JP | 2023-95306 | A | 06 July 2023 | CN | 118679120 | A | |
| | | | | KR | 20240123803 | A | |
| CN | 114914424 | A | 16 August 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023127803 A
- JP 2009184861 A
- WO 2022113904 A1
- JP 2004095400 A